# EUROPEAN PATENT APPLICATION

(11) **EP 4 604 478 A1**
(43) Date of publication of application: **20.08.2025**
(21) Application number: 25154815.2
(22) Date of filing: 29.01.2025
(51) Int. Cl.: H04L 41/0833, H04L 41/0894, H04W 24/02

(54) **INFORMATION PROCESSING METHOD, INFORMATION PROCESSING APPARATUS, AND STORAGE MEDIUM**

(30) Priority: 15.02.2024 JP 2024021279
(71) Applicant: TOYOTA JIDOSHA KABUSHIKI KAISHA, Aichi-ken, 471-8571 (JP); KDDI CORPORATION, Shinjuku-ku Tokyo 163-8003 (JP)
(72) Inventor: SHAO, Xiao, TOYOTA-SHI, AICHI-KEN, 471-8571 (JP); OMI, Satoshi, TOYOTA-SHI, AICHI-KEN, 471-8571 (JP); ITO, Akira, TOYOTA-SHI, AICHI-KEN, 471-8571 (JP); YAMAMOTO, Kenichi, TOKYO, 163-8003 (JP)
(74) Representative: Cabinet Beau de Loménie

(57) **Abstract**

An information processing method comprises a first network function (NF) (2) within a core network executing: receiving, from a second NF (1), a provision request for a BDT policy to be utilized when background data transfer is performed, and an energy requirement that is a requirement regarding energy related to communication; and acquiring a BDT policy that satisfies the energy requirement.

## Description

### CROSS REFERENCE TO THE RELATED APPLICATION

This application claims the benefit of Japanese Patent Application No. 2024-021279, filed on February 15, 2024, which is hereby incorporated by reference herein in its entirety and to which the person of the art can refer to when considering the present disclosure.

### BACKGROUND

### Technical Field

The present disclosure relates to a communication network.

### Description of the Related Art

In a 3rd generation partnership project (3GPP) (R) communication system, a system that provides a policy for performing background data transfer (BDT) is disclosed (3GPP TS 23.502 V18.4.0 "Procedures for the 5G System (5GS) (Release 18)", 3GPP TSG SA WG2, 2023, December, "4.16.7 Negotiations for future background data transfer"). Further, Japanese Translation of PCT International Application Publication No. 2023-529628 discloses a system capable of avoiding conflict of a BDT policy.

The present disclosure is directed to performing background data transfer based on requirements regarding energy consumption related to communication.

The present disclosure in its one aspect provides an information processing method comprising: a first network function (NF) within a core network executing: receiving, from a second NF, a provision request for a BDT policy to be utilized when background data transfer is performed, and an energy requirement that is a requirement regarding energy related to communication; and acquiring a BDT policy that satisfies the energy requirement.

The present disclosure in its another aspect provides an information processing apparatus that functions as a first network function (NF) within a core network, the information processing apparatus comprising: a controller configured to execute: receiving, from a second NF, a provision request for a BDT policy to be utilized when background data transfer is performed, and an energy requirement that is a requirement regarding energy related to communication; and acquiring a BDT policy that satisfies the energy requirement.

Further, other aspects include an apparatus that executes the above-described information processing method, a program for causing a computer to execute the information processing method or a computer-readable storage medium non-transitorily storing the program.

According to the present disclosure, it is possible to perform background data transfer based on requirements regarding energy consumption related to communication.

### BRIEF DESCRIPTION OF THE DRAWINGS

Fig. 1 is a diagram illustrating one example of an architecture of a 5th generation mobile communication system;
Fig. 2 is a diagram for explaining BDT policy acquisition processing in a communication system;
Fig. 3 is a diagram illustrating one example of a hardware configuration of an information processing apparatus operable as a network function;
Fig. 4 is a diagram illustrating one example of a functional configuration of an PCF 2;
Fig. 5 is a diagram illustrating one example of a functional configuration of an NWDAF 3;
Fig. 6 is a first flowchart of processing to be performed by the PCF 2;
Fig. 7 is a second flowchart of processing to be performed by the PCF 2;
Fig. 8 is a diagram indicating one example of a sequence of BDT policy provision processing;
Fig. 9 is a diagram indicating one example of a sequence of BDT policy reselection processing;
Fig. 10 is a third flowchart of processing to be performed by the PCF 2;
Fig. 11 is a flowchart of processing to be performed by the PCF 2 in a modification of a first embodiment; and
Fig. 12 is a diagram indicating one example of a sequence of BDT policy provision processing in the modification of the first embodiment.

### DESCRIPTION OF THE EMBODIMENTS

There is a technique of transmitting data that is not required to be in real-time by utilizing a vacant time in a time period during which there are enough radio network resources. Such communication is also referred to as background data communication (background data transfer (BDT)) or gap communication.

In the 5G system, there is a mechanism for controlling background data transfer using a policy. In the following description, the policy for performing background data transfer will be referred to as a BDT policy.

The BDT policy is provided to an application by a policy control function (hereinafter, a PCF) included in a core network and applied to predetermined user equipment (hereinafter, UE) by the application. In the 5G system, a plurality of BDT policies are stored in a unified data repository (hereinafter, a UDR), and the PCF selects a BDT policy that matches predetermined communication conditions (for example, an area and a time frame). The UE can perform background data transfer in a desired time frame in a desired area by performing communication in accordance with the selected BDT policy.

The PCF acquires performance information, and the like, on a user plane from a network data analytics function (NWDAF) and selects a BDT policy that matches target UE based on the performance information, and the like. However, the existing technique does not take into account selection of the BDT policy using other conditions.

For example, it is not possible that background data transfer is performed in a case where requirements, such as energy consumption, energy efficiency, and a renewable energy ratio, are satisfied when communication is performed. An information processing method according to the present disclosure solves this problem.

An information processing method according to one aspect of the present disclosure includes a first network function (NF) within a core network executing receiving, from a second NF, a provision request for a BDT policy to be utilized when background data transfer is performed, and energy requirements that are requirements regarding energy related to communication, and acquiring a BDT policy that satisfies the energy requirements.

The first NF, which is a network function that acquires a BDT policy to be applied to predetermined UE, is typically a policy control function (hereinafter, a PCF). The PCF receives the provision request for the BDT policy and the energy requirements from the second NF. The second NF can be, for example, a network function (application function, hereinafter, an AF) corresponding to an external application. The external application may be an application that provides communication control in which the energy requirements are taken into account.

The energy requirements to be received along with the provision request are requirements regarding energy to be consumed in communication and are requirements that should be satisfied when background data transfer is performed. The energy requirements may be, for example, requirements that designate an amount of energy to be consumed in equipment or functions through which user data goes, energy efficiency, a renewable energy ratio, thresholds thereof, or the like.

The first NF acquires a BDT policy that satisfies the energy requirements received along with the provision request.

In this manner, by determining whether or not the energy requirements can be satisfied when the BDT policy is acquired, it is possible to perform background data transfer while taking into account an amount of energy to be consumed and quality thereof.

Note that the first NF may acquire the BDT policy based at least on energy related information within a network, which is provided by a network data analytics function (NWDAF).

The energy related information is information regarding energy to be consumed within the network. The first NF may receive the energy related information from the NWDAF and select the BDT policy based on the energy related information. Thus, the energy related information may be added to a communication interface with the NWDAF.

Further, the first NF may register the energy requirements to the NWDAF and receive, from the NWDAF, the energy related information to be transmitted in accordance with whether the energy requirements are satisfied.

The first NF may register (subscribe) energy requirements to be satisfied to the NWDAF. In this case, the NWDAF may generate and transmit the energy related information to the first NF in accordance with whether the energy requirements are satisfied. The first NF may determine a BDT policy that satisfies the energy requirements based on the energy related information.

Further, the first NF may acquire a plurality of BDT policies stored in advance from a unified data repository (UDR). Further, the first NF may select one or more BDT policies that match the energy requirements from the plurality of BDT policies.

Further, the first NF may acquire a BDT policy that further satisfies second energy requirements designated by a network operator.

The information processing method according to the present disclosure may be executed by a computer within the core network or may be executed by a computer outside the core network. The core network may be, for example, one of a 5th generation (5G) mobile core network, a 4th generation (4G) mobile core network and 6th generation (6G) or later mobile core network.

Specific embodiments of the present disclosure will be described below based on the drawings. Hardware configurations, module configurations, functional configurations, and the like, described in the respective embodiments are not intended to limit the technical scope of the disclosure thereto unless otherwise described.

### (First Embodiment)

### [Outline of Communication System]

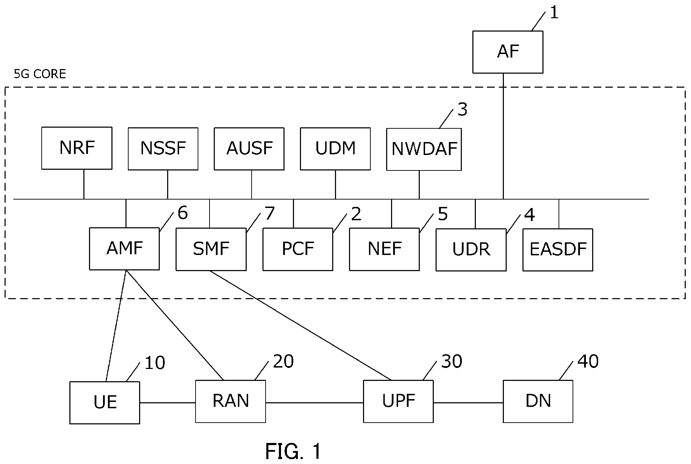

Fig. 1 is a diagram illustrating one example of an architecture of a 5th generation mobile communication system (5G). The 5G network includes a 5G core network and a radio access network (RAN). User equipment (UE) 10, a data network (DN) 40 and an application function (AF) 1 are connected to the 5G network. The UE 10 is equipment of a user (subscriber). The radio access network (RAN) 20 is a radio access network to the 5G core network. The RAN 20 includes a base station (gNB). Note that while Fig. 1 illustrates the radio access network, an access network (AN) other than the radio access network may be used for connection to the 5G core network.

Fig. 1 illustrates some of components included in the 5G core network. Further, in Fig. 1, components according to a first embodiment are denoted by reference numerals. In the 5G, software that implements network functions is separated from hardware on which the software is to be executed using a hardware abstraction technique. This makes it possible for software of various network functions to operate on a common hardware resource without depending on configurations for each hardware product. Fig. 1 illustrates network functions (NFs) included in the 5G core network. Each of a plurality of NFs included in the 5G core network is implemented by one or more computers (information processing apparatuses) executing a program. However, a single computer may implement any two or more NFs.

A user plane function (UPF) 30 performs routing of user packets, transfer, packet inspection and QoS processing. The user packets are packets of a user plane to be transmitted and received by the UE 10.

An access and mobility management function (AMF) 6 accommodates the RAN and performs registration management, connection management and mobility management of the UE in the 5G core network. Further, the AMF 6 relays messages between the SMF 7 and the UE 10.

A session management function (SMF) 6 performs management of a protocol data unit (PDU) session, allocation and management of IP addresses to the UE, and selection and control of the UPF 30. The management of the PDU session includes establishment, modification and release of the PDU session. For example, if a policy is changed, change of the PDU session occurs, and change of the QoS or the policy is applied to the UPF 30 through the SMF 7. The PDU session is a virtual communication path to exchange data between the UE 10 and the data network (DN) 40. The DN 40 is a data network (such as a cloud and the Internet) outside the 5G core network.

A policy control function (PCF) 2 provides a policy rule (hereinafter, simply referred to as a policy) to each NF to cause each NF to perform processing complying with the policy rule. The policy includes, for example, rules regarding QoS, filtering, routing or charging. In a case where the policy is registered, changed or deleted, first, the PCF 2 is notified of these, and the PCF 2 performs control of setting, change, deletion, or the like, of the polity for the corresponding UPF 30 through the SMF 6. The PCF 2 is one example of a "first NF".

The UDR 4 stores data to be used at unified data management (UDM), the PCF 2 and the NEF 5 and provides these kinds of data.

The NEF 5 provides a function of safely disclosing capabilities disclosed by the network functions within the 5G system and event information to an external application such as an application function (AF). Further, the NEF 5 provides a function of transferring information from the permitted external application into the network.

The AF is an application server (external server) that provides an auxiliary service other than 5G core specifications.

In the present embodiment, an AF 1 is presented as an example of such a server. The AF 1 transmits/receives information to/from an apparatus within the 5G core network via the NEF 5.

In the present embodiment, the AF 1 is an external application that performs communication control of the UE based on the energy consumption when the user equipment (UE) performs communication. In the present embodiment, the AF 1 provides a function for optimizing communication to be performed by the UE based on predetermined energy requirements. Details will be described later.

The AF 1 is one example of a "second NF".

An NWDAF 3 provides analytics information within the network. The analytics information within the network to be provided by the NWDAF 3 includes, for example, a communication delay, throughput, jitter and a traffic load level in each section.

Further, in the present embodiment, the NWDAF 3 is configured to be able to collect and provide information regarding energy to be consumed within the network. As one example of the information regarding the energy to be consumed within the network, there is, for example, information regarding an amount of energy (energy consumption, also referred to as EC) to be consumed by network equipment (or network functions) or energy efficiency (also referred to as EE) of the network equipment (or the network functions), within a predetermined area. The energy consumption may be represented by, for example, an amount of power in watt-hour, joule or the like. The energy efficiency can be, for example, an index indicating how efficient data transfer can be performed. For example, examples of the index can include a value indicating an amount of energy consumed per unit data communication amount. Further, as one example of the information regarding the energy to be consumed within the network, a value indicating a ratio of renewable energy with respect to the consumed energy (renewable energy ratio) can be presented.

An edge application server discovery function (EASDF) relays communication between the UE 10 and a DNS server.

An NRF stores and manages information regarding the NFs (such as, for example, the AMF, the SMF and the UPF) within the 5GC. The NRF can return, in response to an inquiry regarding an NF that is desired to be used, a plurality of candidates for the NF to an inquiry source.

An NSSF has a function of selecting a network slice to be used by a subscriber from network slices generated through network slicing. The network slice is a virtual network having specifications in accordance with applications.

An AUSF provides a function of UE authentication.

A UDM holds subscriber contract information and authentication information for AKA authentication.

In the 5G core network, there is a case where a plurality of NFs of the same type are prepared. For example, there is a case where one NF is prepared for each data center. There is also a case where one NF is shared among the data centers. There is also a case where one data center constitutes a plurality of NFs of the same type. A correspondence relationship between the NFs and the data centers can be set as appropriate.

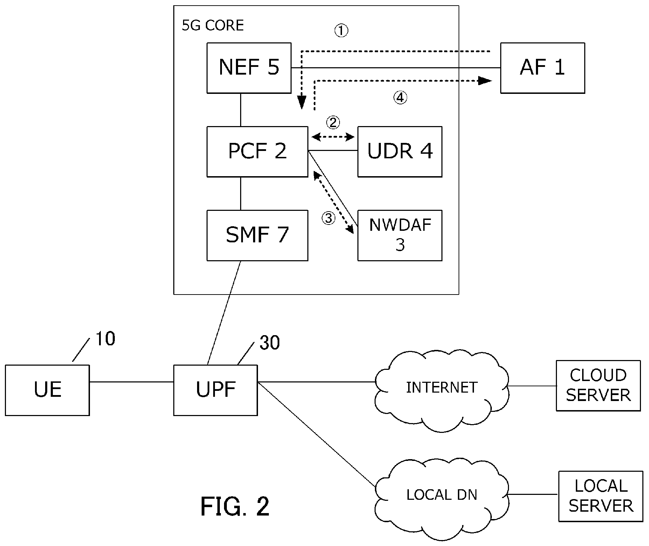

Fig. 2 is a diagram for explaining processing of acquiring and providing a background data transfer policy (BDT policy) in the communication system according to the present embodiment. The background data transfer (BDT) is a data transmission method for transmitting data by utilizing a vacant time in a time period during which there are enough radio network resources.

In the 5G system, there is a mechanism in which the PCF acquires a policy (BDT policy) for performing background data transfer and provides the policy to an application, or the like, that is to be used for the background transfer. Normally, the BDT policy is selected based on an area designated by the AF, a period during which communication is to be performed, a communication data amount, and the like.

On the other hand, in such an embodiment, for example, the BDT policy cannot be determined using requirements regarding energy to be consumed on the user plane. For example, even in a case where it is desired to introduce requirements requiring that "background data transfer be performed under conditions that energy consumption per unit data amount is smaller than a predetermined value", this cannot be achieved.

Thus, in the first embodiment, a function of providing an analytics result regarding the energy to be consumed within the network to outside is added to the NWDAF that is a network function of providing analytics information within the network. Further, the PCF that is a network function of performing policy control determines whether or not it is possible to provide the BDT policy based on the information acquired from the NWDAF in response to a request from the AF. The PCF selects a BDT policy that satisfies predetermined energy requirements as the BDT policy to be provided to the AF among a plurality of BDT policies prepared in advance.

According to such a configuration, it becomes possible to perform background data transfer while taking into account the energy requirements.

The communication system includes the 5G core, the UE 10 and the UPF 30. Fig. 2 illustrates the AF 1, the PCF 2, the NWDAF 3, the UDR 4, the NEF 5 and the SMF 7 in the communication system among the network functions included in the 5G core. However, the network functions included in the communication system are not limited to these.

Note that a local data network (local DN) within the same mobile network as the 5G core is connected to the UPF 30. Further, the Internet that is a wide area network is connected to the UPF 30. A local server such as an edge server may be arranged in the local DN. Further, a cloud server, and the like, may be arranged in the Internet.
(1) First, the AF 1 transmits an acquisition request for the BDT policy to the PCF 2. The acquisition request includes energy requirements. The energy requirements are requirements regarding energy which are preferably satisfied upon background data transfer. The energy requirements may be, for example, requirements indicating thresholds of an amount of energy to be consumed in the equipment or the functions within the network, energy efficiency, a renewable energy ratio, or the like when UE located in a predetermined area performs communication. In the present embodiment, background data transfer is permitted under conditions that the energy requirements are satisfied. The acquisition request transmitted from the AF 1 is acquired by the PCF 2 via the NEF 5.
(2) Then, the PCF 2 acquires the BDT policy stored in advance from the UDR 4. The PCF 2 may acquire a plurality of BDT policies.
(3) Then, the PCF 2 performs communication with the NWDAF 3 to acquire information (energy related information) regarding the energy to be consumed in the network from the NWDAF 3. The PCF 2 may register (subscribe) the energy requirements received from the AF 1 to the NWDAF 3 and receive the energy related information at a predetermined timing as information regarding whether the energy requirements are satisfied. Further, the PCF 2 may make an inquiry to the NWDAF 3 at a predetermined timing and acquire the corresponding energy related information from the NWDAF 3.
(4) Then, the PCF 2 selects a BDT policy that satisfies the energy requirements among the BDT policies acquired in the above (2) based on the energy related information acquired from the NWDAF 3 and transmits the selected BDT policy to the AF 1.

### [Hardware Configuration]

Hardware configurations of the respective apparatuses constituting the system will be described next.

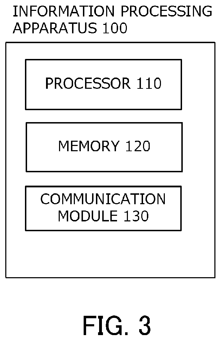

Fig. 3 is a diagram illustrating one example of a hardware configuration of an information processing apparatus operable as each of the network functions including the PCF 2 and an external server.

An information processing apparatus 100 is configured as a computer including a processor (such as a CPU and a GPU), a main memory (such as a RAM and a ROM) and an auxiliary memory (such as an EPROM, a hard disk drive and a removable medium). In the auxiliary memory, an operating system (OS), various kinds of programs, various kinds of tables, and the like, are stored, and each function (software module) that matches a predetermined purpose as will be described later can be implemented by the program stored therein being executed. Further, the information processing apparatus 100 may be an aggregate (cloud) of one or more computers. However, some or all of the functions may be implemented by a hardware circuit such as an ASIC and an FPGA as a hardware module.

The information processing apparatus 100 includes a processor 110, a memory 120 and a communication module 130.

The processor 110 is an arithmetic unit that implements various kinds of functions of the information processing apparatus 100 by executing a predetermined program. The processor 110 can be implemented by, for example, a hardware processor such as a CPU. Further, the processor 110 may include a RAM, a read only memory (ROM), a cache memory, and the like.

The memory 120 is means for storing information and is constituted with a storage medium such as a RAM, a magnetic disk and a flash memory.

The memory 120 may include a main memory and an auxiliary memory. The auxiliary memory stores programs to be executed by the processor 110, data, and the like, to be utilized by the programs. The auxiliary memory is, for example, an erasable programmable ROM (EPROM), a hard disk drive or a solid state drive (SSD). Examples of the programs stored in the auxiliary memory can include, for example, an operating system (OS) and a control program.

The communication module 130 is a communication interface for connecting the information processing apparatus 100 to an external network. The communication module 130, which includes, for example, a network interface card (NIC), an optical network interface, and the like, is configured to be able to communicate with a predetermined network via these.

### [Software Configuration]

A software configuration of the information processing apparatus 100 will be described next. As described above, the information processing apparatus 100 illustrated in Fig. 3 functions as the PCF 2 and the NWDAF 3.

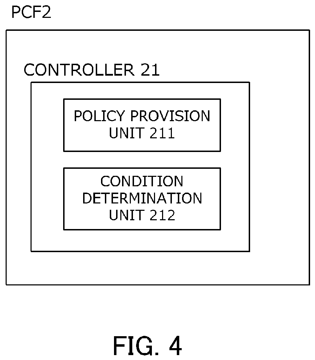

Fig. 4 is a diagram schematically illustrating a software configuration in a case where the information processing apparatus 100 functions as the PCF 2.

In the present embodiment, the processor 110 provided in the information processing apparatus 100 functions as a controller 21 of the PCF 2. Further, the controller 21 includes two software modules of a policy provision unit 211 and a condition determination unit 212. Each software module may be implemented by the processor 110 (such as the CPU) executing a program stored in the memory 120. Note that information processing to be executed by the software modules is synonymous with information processing to be executed by the processor 110 (such as the CPU).

In a case where a request is issued from the AF 1, the policy provision unit 211 acquires a policy (BDT policy) for performing background data transfer (BDT) from the UDR 4 and provides a matching BDT policy to the AF 1.

Specifically, the policy provision unit 211 first receives a provision request for the BDT policy from the AF 1. Conditions regarding an area designated by the AF, a time frame in which background data transfer is to be performed, a data transfer amount, and the like, are also received along with the request. The policy provision unit 211 acquires one or more available candidates for the BDT policy from the UDR and selects a BDT policy that matches the request.

This processing is processing conforming to a method for providing the BDT policy standardized by the 3rd generation partnership project (3GPP).

The condition determination unit 212 determines whether or not predetermined energy requirements are satisfied for each of the candidates for the BDT policy acquired by the policy provision unit 211.

In the present embodiment, requirements (energy requirements) regarding the energy to be consumed in the network are also transmitted along with the provision request for the BDT policy. The energy requirements are designated by the AF 1. The energy requirements are transmitted to the condition determination unit 212.

Further, the condition determination unit 212 performs communication with the NWDAF 3 and determines whether or not there is a BDT policy that satisfies the designated energy requirements among the candidates for the BDT policy. The condition determination unit 212 may acquire analytics information regarding energy consumption under the designated conditions (for example, an area and a time frame) from the NWDAF 3 and perform the above-described determination based on the analytics information.

In the present disclosure, the analytics information regarding energy consumption provided from the NWDAF 3 will be also referred to as "energy related information".

The condition determination unit 212 filters candidates for the BDT policy that do not satisfy the designated energy requirements among the candidates for the BDT policy and selects a BDT policy that matches the energy requirements as a BDT policy to be provided to the AF 1.

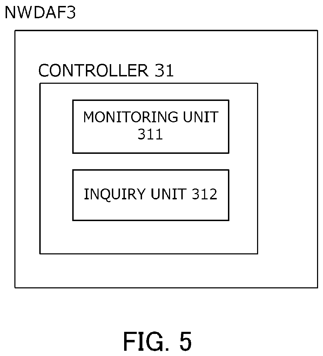

Fig. 5 is a diagram schematically illustrating a software configuration in a case where the information processing apparatus 100 functions as the NWDAF 3.

In the present embodiment, the processor 110 provided in the information processing apparatus 100 functions as a controller 31 of the NWDAF 3. Further, the controller 31 includes two software modules of a monitoring unit 311 and an inquiry unit 312. Each software module may be implemented by the processor 110 (such as the CPU) executing the program stored in the memory 120. Note that information processing to be executed by the software modules is synonymous with information processing to be executed by the processor 110 (such as the CPU).

The NWDAF 3 can provide the energy related information to the PCF 2 in two ways. The monitoring unit 311 receives registration of the energy requirements and generates and provides as appropriate the energy related information in accordance with whether the energy requirements are satisfied. The inquiry unit 312 generates and provides the energy related information in response to each inquiry. The two modules provide substantially the same information while only a trigger of operation is different.

The monitoring unit 311 accepts data that requests subscription registration from the external apparatus. The monitoring unit 311 can accept the subscription registration using, for example, a Nnwdaf_AnalyticsSubscription service. The data that requests subscription registration (Nnwdaf_AnalyticsSubscription_subscribe) includes predetermined conditions (such as an area and a time frame) and energy requirements that should be satisfied under the conditions. The monitoring unit 311 monitors and analyzes the network based on the data and returns an analytics result (Nnwdaf_AnalyticsSubscription_notify) at a predetermined timing. The monitoring unit 311 transmits the analytics result to the external apparatus, for example, in a case where the energy requirements become satisfied on the designated conditions or in a case where the energy requirements are predicted to become satisfied in the future. Note that the analytics result may be transmitted in a case where the energy requirements become unsatisfied or in a case where the energy requirements are predicted to become unsatisfied in the future. In the present embodiment, the analytics result (energy related information) includes three of an amount of energy to be consumed (energy consumption, EC), energy efficiency (EE) and a renewable energy ratio. These values may be actual values or may be predicted values.

For example, in a case where energy requirements requiring that "a use rate of a renewable energy be equal to or higher than 50% in the designated area and time frame" are received, the PCF 2 requests the NWDAF 3 (monitoring unit 311) to perform analysis regarding the use rate of the renewable energy in the area and the time frame. In a case where the use rate of the renewable energy in the area and the time frame exceeds 50% or is predicted to exceed 50%, the NWDAF 3 (monitoring unit 311) transmits the analytics result to the PCF 2 as the energy related information.

The NWDAF 3 has a function of providing analytics information (energy related information) each time in response to an information provision request received from the external apparatus in addition to a function of accepting subscription registration from the external apparatus, and in a case where predetermined conditions are satisfied, actively providing analytics information (energy related information) to the external apparatus.

In a case where an information provision request is issued from an external apparatus, the inquiry unit 312 acquires analytics information regarding energy to be consumed by the network equipment (or the network functions) under the designated conditions (for example, an area and a time frame) and provides the analytics information to the external apparatus as the "energy related information". The inquiry unit 312 provides the analytics information using, for example, an Nnwdaf_AnalyticsInfo service.

For example, in a case where energy requirements requiring that a "ratio of the renewable energy with respect to an amount of energy to be consumed in the network be equal to or higher than 50% in a case where communication is performed in the designated area or time frame" are received, the PCF 2 requests the NWDAF 3 (inquiry unit 312) to perform analysis regarding the use rate of the renewable energy in the area and the time frame. The NWDAF 3 (inquiry unit 312) transmits the analytics result regarding the use rate of the renewable energy in the area and the time frame to the PCF 2 as the energy related information.

Note that the inquiry unit 312 and the monitoring unit 311 may be configured to be able to acquire and provide analytics information other than the illustratively presented information. For example, the inquiry unit 312 may be configured to be able to acquire and provide other statistics information regarding energy consumption. Further, the inquiry unit 312 and the monitoring unit 311 may be configured to be able to provide a function of providing other statistics information or analytics information regarding the network, which is standardized by the third generation partnership project (3GPP). Examples of the statistics information (analytics information) can include, for example, information regarding network performance, information regarding network load, analytics information of the UE, information regarding a congestion degree of user data, and information regarding QoS.

Note that the configurations illustrated in Fig. 3 to Fig. 5 are one example, and all or some of the illustrated functions may be implemented by an exclusively designed circuit. Further, the programs may be stored or executed by combinations of the main memory and the auxiliary memory other than the illustrated combination.

### [Processing Flowchart]

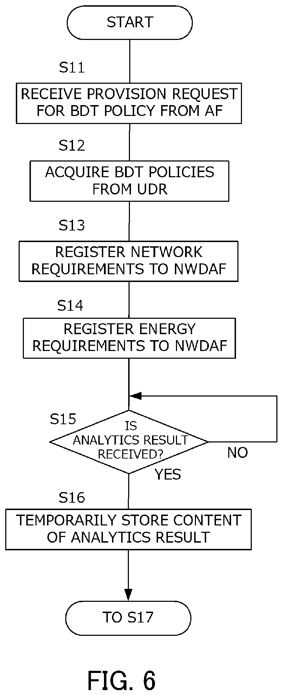

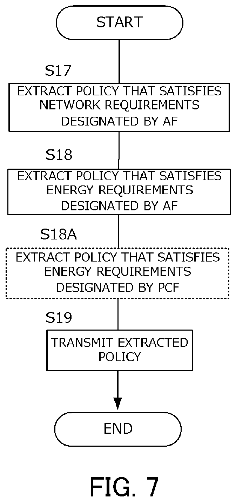

A flowchart of processing to be executed by the PCF 2 will be described next. Fig. 6 and Fig. 7 are flowcharts of processing to be executed by the PCF 2 in the present embodiment. The processing indicated in Fig. 6 is started in a case where an acquisition request for the BDT policy is transmitted from the AF 1. The AF 1 may transmit the acquisition request for the BDT policy, for example, before a PDU session of the UE is established.

First, in step S11, the controller 21 (policy provision unit 211) receives the policy acquisition request transmitted from the AF 1. The policy acquisition request is, for example, transmitted from the AF 1 to the PCF 2 via the NEF 5. The policy acquisition request may be, for example, transmitted to the NEF 5 via an API of an Nnef_BDTPNegotiation_Create service and may be transmitted from the NEF 5 via an API of an Npcf_BDTPolicyControl_Create service.

The policy acquisition request includes information regarding an identifier of an application service provider (ASP) to which the AF 1 belongs, an amount of data to be transferred, a desired time frame, a desired area, and the like. The information regarding the area in which the UE is located is, for example, a list of geographical regions and tracking areas, a list of RAN nodes, a list of cell identifiers, or the like.

Further, the policy acquisition request in the present embodiment includes energy requirements that should be satisfied when background data transfer is performed. As described above, the energy requirements include at least a threshold of one of an amount of energy to be consumed in the equipment (or the functions) within the network in which the UE performs communication, energy efficiency or a renewable energy ratio.

Then, in step S12, the controller 21 (policy provision unit 211) acquires the BDT policies stored in the UDR 4 from the UDR 4. Note that in a case where the BDT policies are stored for each ASP, the policy provision unit 211 may acquire BDT policies corresponding to the target ASP. The BDT policies are acquired by, for example, an API of an Nudr_DM_Query service.

The condition determination unit 212 determines whether or not the designated energy requirements have been satisfied in the network by utilizing a subscription service of network data analysis provided by the NWDAF 3.

First, the condition determination unit 212 registers (subscribes) requirements (hereinafter, network requirements) for determining network performance to the NWDAF 3 in step S13. The requirements are utilized for determining whether or not the BDT policy matches the area and the time frame designated by the AF 1. The condition determination unit 212 may register the requirements regarding the network performance to the NWDAF 3 by utilizing an Nnwdaf_AnalyticsSubscription_Subscribe service.

In step S14, the controller 21 (condition determination unit 212) registers (subscribes) the energy requirements included in the policy acquisition request to the NWDAF 3. The energy requirements designate, for example, one of the following.
(1) A threshold of an amount of energy to be consumed within the network in a case where the UE performs communication within a predetermined area
(2) A threshold of energy efficiency in a case where the UE performs communication within the predetermined area
(3) A threshold of a ratio of a renewable energy amount with respect to an amount of energy to be consumed within the network in a case where the UE performs communication within the predetermined area

The condition determination unit 212 registers an analytics ID (Analytics ID allocated to analysis regarding energy) unique to the present embodiment, the energy requirements to the NWDAF 3 by utilizing an Nnwdaf_AnalyticsSubscription_Subscribe service. The energy requirements may be, for example, stored in an Analytics subset.

Note that there is a case where the energy requirements are designated by, for example, a network operator other than the energy requirements designated by the AF 1. In this case, the PCF 2 may register the energy requirements to the NWDAF 3.

The analytics result generated by the NWDAF 3 is transmitted to the subscriber (PCF 2) at a predetermined timing. The analytics result may be generated, for example, in a case where the energy requirements and the network requirements are satisfied or predicted to be satisfied. The condition determination unit 212 receives the analytics result generated by the NWDAF 3 by utilizing an Nnwdaf_AnalyticsSubscription_Notify service (step S15). The analytics result includes, for example, an analytics ID, an analytics parameter, a timestamp, a valid period, a degree of certainty, meta information, and the like.

In a case where the condition determination unit 212 does not receive the analytics result from the NWDAF 3, the processing stands by for a predetermined period, and the processing of step S15 is repeated. In a case where the condition determination unit 212 receives both the analytics result for the energy requirements and the analytics result for the network requirements from the NWDAF 3, the processing transitions to step S16.

The condition determination unit 212 that has received the analytics result temporarily stores content of the analytics result (step S16).

The PCF 2 that has received the analytics result from the NWDAF 3 performs processing of selecting a BDT policy that matches the network requirements and the energy requirements from the BDT policies acquired in step S12 and providing the selected BDT policy to the AF 1. Fig. 7 is a flowchart of the processing.

First, in step S17, the policy provision unit 211 determines whether or not there is a BDT policy that satisfies the network requirements among the BDT policies acquired from the UDR in step S12. For example, the policy provision unit 211 determines whether or not there is a BDT policy that matches the area and the time frame designated in the policy acquisition request acquired from the AF 1 as determination as to whether the network requirements are satisfied.

Note that in the present step, whether or not the BDT policy matches the requirements may be determined taking into account a policy, and the like, uniquely set by the operator in addition to the network requirements.

In a case where there is a BDT policy that matches the designated area and time frame, the policy provision unit 211 temporarily stores the BDT policy, and the processing transitions to step S18. In other words, the BDT policies that do not match the designated area and time frame are filtered in step S17.

In step S18, the condition determination unit 212 determines whether or not there is a BDT policy that satisfies the energy requirements designated by the AF 1 among the BDT policies extracted in step S17. In the present step, it is determined whether or not there is a BDT policy that satisfies the energy requirements by checking the analytics result received in step S15 against the energy requirements.

For example, a case will be considered where the designated energy requirements require that a "ratio of a renewable energy with respect to an amount of the energy to be consumed in the network be equal to or higher than 50% in a case where communication is performed in the designated area and time frame".

The condition determination unit 212 determines whether or not requirements requiring that the "use rate of the renewable energy be equal to or higher than 50%" are satisfied in a case where background data transfer is performed in the designated area and time frame based on the analytics result acquired from the NWDAF 3. In a case where it is determined in the present step that the energy requirements are satisfied, the processing transitions to step S18A.

Step S18A is a step of determining whether or not there is a BDT policy that satisfies the energy requirements designated by the PCF 2. In a case where there are energy requirements designated by the PCF 2 in addition to the energy requirements designated by the AF 1, the present step is executed. Note that in a case where there is no energy requirement designated by the PCF 2, the present step may be skipped.

In step S18 and step S18A, the condition determination unit 212 extracts a BDT policy that satisfies the energy requirements from the BDT policies temporarily stored in step S16.

In step S19, the policy provision unit 211 transmits the BDT policy extracted in step S18 (and S18A) to the AF 1. In the present step, both the BDT policy and a BDT reference ID may be transmitted. The BDT reference ID is an identifier that uniquely identifies the BDT policy.

Note that in a case where a BDT policy that satisfies the energy requirements is not extracted in step S18 and step S18A, the PCF 2 may notify the AF 1 that the BDT policy is not extracted.

Note that execution order from step S13 to S14 and execution order from S17 to S18A are not limited to the illustrated order.

### [One Example of Sequence of Providing BDT Policy]

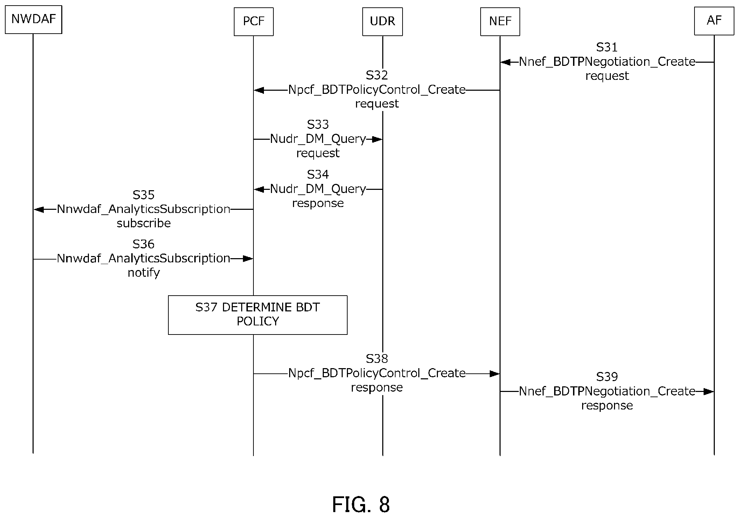

Fig. 8 is one example of a sequence of processing from when the provision request for the BDT policy is issued from the AF 1 until when the BDT policy is provided to the AF 1.

First, in step S31, the AF 1 transmits an Nnef_BDTPNegotiation_Create_request message to the NEF 5 in step S31. The Nnef_BDTPNegotiation_Create_request message is the provision request for the BDT policy. The message includes the area and the time frame designated by the AF 1 and the energy requirements.

Note that while in the present embodiment, the energy requirements are included in the message, the energy requirements may be transmitted from the AF 1 using another message. The "provision request" in the present disclosure may be transmitted separately from the energy requirements, or the provision request including the energy requirements may be transmitted.

Then, in step S32, the NEF 5 transmits an Npcf_BDTPolicyControl_Create_request message to the PCF 2. By this means, the PCF 2 receives the provision request for the BDT policy including the energy requirements designated by the AF 1.

The PCF 2 transmits an Nudr_DM_Query_request message to the UDR 4 in step S33. The message is a message that requests provision of information stored in the UDR 4. The message may include data indicating request for a BDT policy corresponding to a predetermined ASP as the target information to be provided.

In step S34, an Nudr_DM_Query_response message is transmitted from the UDR 4 to the PCF 2. The message includes one or more BDT policies held by the UDR 4.

In step S35, an Nnwdaf_AnalyticsSubscription_subscribe message is transmitted from the PCF 2 to the NWDAF 3. The message is a message for registering subscription to the NWDAF 3. The message includes information regarding the area and the time frame designated by the AF 1 and the energy requirements. Step S35 corresponds to processing in step S13 and step S14.

In step S36, an Nnwdaf_AnalyticsSubscription_notify message is transmitted from the NWDAF 3 to the PCF 2. The message includes analytics information (the energy related information or information regarding network performance) for the subscribed conditions. The message is transmitted, for example, in a case where the energy requirements (or the network requirements) become satisfied under conditions designated by the Nnwdaf_AnalyticsSubscription_subscribe message or in a case where the energy requirements (or the network requirements) are predicted to be satisfied in the future.

In step S37, the PCF 2 executes the processing indicated in Fig. 7, thereby the BDT policy is determined.

In step S38, an Npcf_BDTPolicyControl_Create_response message is transmitted from the PCF 2 to the NEF 5. The message is a response to the Npcf_BDTPolicyControl_Create_request message transmitted in step S32 and includes one or more BDT policies.

In step S39, an Nnef_BDTPNegotiation_Create_response message is transmitted from the NEF 5 to the AF 1. The message is a response to the Nnef_BDTPNegotiation_Create_request message transmitted in step S31 and includes one or more BDT policies.

Note that in a case where two or more BDT policies are transmitted from the PCF 2 to the AF 1, the AF 1 determines the BDT policy to be actually employed. Thus, in such a case, information for identifying the BDT policy employed by the AF 1 may be transmitted from the AF 1 to the PCF 2 after step S39 is executed.

The AF 1 that has received the BDT policy performs predetermined processing for instructing the respective apparatuses (functions) within the network to apply the BDT policy by utilizing, for example, an Nnef_ApplyPolicy service to cause the subordinate UE to perform background data transfer.

### [One Example of Reselection Sequence of BDT Policy]

A BDT policy for performing background data transfer can be provided to the AF 1 through the processing indicated from Fig. 6 to Fig. 8.

On the other hand, circumstances of the network constantly change, and thus, there is a case where background data transfer conforming to the BDT policy cannot be performed in the middle. Further, in accordance with change of the network circumstances, there is a case where it is necessary to reselect the BDT policy. Here, a processing sequence in such a case will be described.

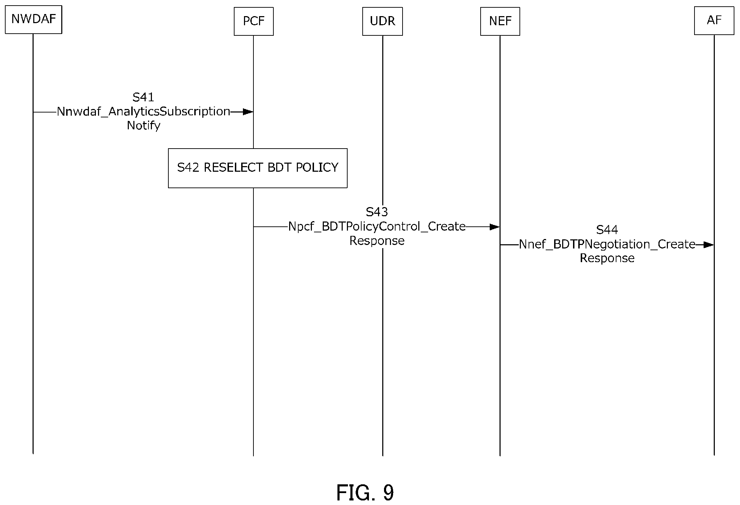

Fig. 9 is one example of a sequence in a case where the BDT policy is reselected. It is assumed here that the processing in Fig. 8 is completed, that is, provision of the BDT policy to the AF 1 is completed.

There is a case where the NWDAF 3 retransmits the analytics information in accordance with change of the network circumstances. For example, there is a case where the satisfied energy requirements become unsatisfied in accordance with change of the network circumstances. Also in such a case, a message is transmitted from the NWDAF 3 to the PCF 2, for example, via an Nnwdaf_AnalyticsSubscription_notify service. The notification of the analytics information is continuously provided unless the subscription is canceled.

The Nnwdaf_AnalyticsSubscription_notify message indicated in step S41 is transmitted from the NWDAF 3 to the PCF 2 as a result of change of the network circumstances.

In this case, the PCF 2 reselects the BDT policy based on the received analytics information (step S42).

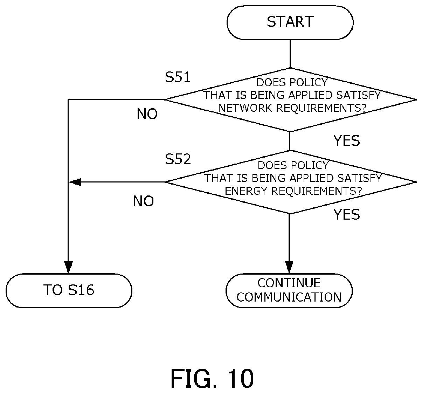

Fig. 10 is a flowchart of processing to be executed by the PCF 2 in step S42.

First, in step S51, the PCF 2 determines whether or not the BDT policy that is currently being applied to the AF 1 satisfies predetermined network requirements. In the present step, for example, the PCF 2 determines whether or not the BDT policy that is currently being applied to the AF 1 matches the area and the time frame designated by the AF 1. In a case where a negative determination result is obtained in step S51, the processing transitions to step S16 in Fig. 7. In other words, it is determined whether or not there is a BDT policy that matches the network requirements among other BDT policies acquired from the UDR 4.

In a case where a positive determination result is obtained in step S51, the processing transitions to step S52, and it is determined whether or not the BDT policy that is currently being applied to the AF 1 satisfies the designated energy requirements. In a case where a negative determination result is obtained in step S52, the processing transitions to step S16 in Fig. 7 in a similar manner. In a case where a positive determination result is obtained in step S52, communication utilizing the BDT policy that is currently being applied is continued.

### [Modification of First Embodiment]

The flowchart and the sequence described above indicate an example of an embodiment in which the NWDAF 3 (monitoring unit 311) accepts subscription registration from the PCF 2 and provides analytics information (energy related information) in response to the subscription registration.

On the other hand, the NWDAF 3 (inquiry unit 312) can accept a request from the PCF 2 each time and provide the analytics information (energy related information).

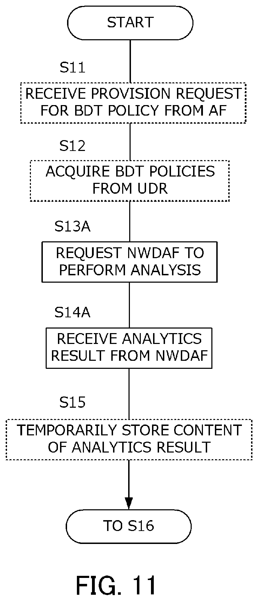

Fig. 11 is a flowchart of processing to be executed by the PCF 2 in the present modification. The same steps as the steps in Fig. 6 are indicated by dotted lines, and description will be omitted.

In the present modification, in step S13A, the PCF 2 (condition determination unit 212) requests the NWDAF 3 (inquiry unit 312) to perform analysis. An Nnwdaf_AnalyticsInfo service can be utilized to request analysis. The request may include information identifying the target area and time frame.

In step S13B, the NWDAF 3 (inquiry unit 312) transmits the analytics result corresponding to the designated area and time frame to the PCF 2 in response to the request.

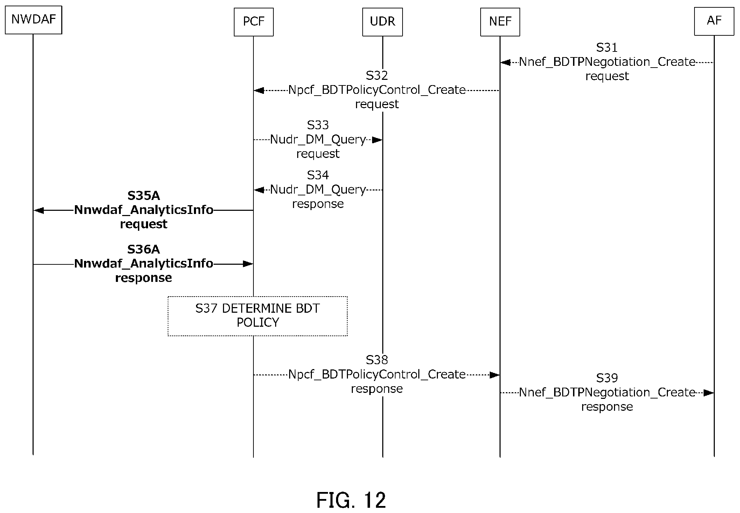

Fig. 12 is one example of a sequence in the present modification. Step 35A is a step to be executed instead of step S35 in Fig. 8. In the present step, an Nnwdaf_AnalyticsInfo_request message is transmitted from the PCF 2 (condition determination unit 212) to the NWDAF 3 (inquiry unit 312). The message is a message for requesting the NWDAF 3 to perform analysis. The message includes information regarding the area and the time frame designated by the AF 1.

Step 36A is a step to be executed instead of step S36 in Fig. 8. In the present step, an Nnwdaf_AnalyticsInfo_ersponse message is transmitted from the NWDAF 3 to the PCF 2. The message includes the analytics information (energy related information) generated in response to the message transmitted in step S35A. Other steps are similar to the steps in Fig. 8, and thus, description will be omitted.

As described above, in the first embodiment (and the modification thereof), the PCF 2 selects the BDT policy that satisfies the energy requirements designated by the AF 1 based on the information provided from the NWDAF 3. Further, the PCF 2 provides the selected BDT policy to the AF 1. This makes it possible to cause the user equipment to execute background data transfer while taking into account requirements regarding energy consumption.

### (Modifications)

The above-described embodiments are merely one example, and the present disclosure can be modified and implemented as appropriate within the range not deviating from the gist of the present disclosure.

For example, the processing and the means described in the present disclosure can be freely combined and implemented unless technical inconsistencies arise.

Furthermore, the processes described as being performed by one device may be shared and executed by a plurality of devices. Alternatively, the processes described as being performed by different devices may be performed by a single device. In a computer system, the hardware configuration (server configuration) by which each function is realized can be flexibly changed.

The present disclosure can also be realized by supplying a computer program implementing the functions described in the above embodiments to a computer, and having one or more processors of the computer read and execute the program. Such a computer program may be provided to the computer by a non-transitory computer-readable storage medium connectable to the system bus of the computer, or may be provided to the computer via a network. Non-transitory computer-readable storage media include, for example, any type of disk, such as a magnetic disk (e.g., a floppy disk, a hard disk drive (HDD), etc.), an optical disk (e.g., a CD-ROM, a DVD disk, a Blu-ray disk, etc.), a read-only memory (ROM), a random-access memory (RAM), an EPROM, an EEPROM, a magnetic card, a flash memory, an optical card, or any type of medium suitable for storing electronic instructions.

## Claims

1. An information processing method comprising:
a first network function (2) within a core network executing:
receiving, from a second network function (1), a provision request for a background data transfer policy to be utilized when background data transfer is performed, and an energy requirement that is a requirement regarding energy related to communication; and
acquiring a background data transfer policy that satisfies the energy requirement.

2. The information processing method according to claim 1, wherein the first network function (2) acquires the background data transfer policy based at least on energy related information within a network provided by a network data analytics function (3).

3. The information processing method according to claim 2, wherein:
the first network function (2) registers the energy requirement to the network data analytics function (3), and
the first network function (2) receives, from the network data analytics function (3), the energy related information transmitted in accordance with whether the energy requirement is satisfied.

4. The information processing method according to any of claims 1 to 3, wherein the energy requirement includes a requirement regarding one of energy consumption, energy efficiency and a renewable energy ratio.

5. The information processing method according to any of claims 1 to 4, wherein the first network function (2) acquires a plurality of background data transfer policies stored in advance from a unified data repository (4).

6. The information processing method according to claim 5, wherein the first network function (2) selects one or more background data transfer policies that match the energy requirement from the acquired plurality of background data transfer policies.

7. The information processing method according to any of claims 1 to 6, wherein the first network function (2) acquires a background data transfer policy that further satisfies a second energy requirement designated by a network operator.

8. An information processing apparatus that functions as a first network function (2) within a core network, the information processing apparatus comprising:
a controller (21) configured to execute:
receiving, from a second network function (1), a provision request for a background data transfer policy to be utilized when background data transfer is performed, and an energy requirement that is a requirement regarding energy related to communication; and
acquiring a background data transfer policy that satisfies the energy requirement.

9. The information processing apparatus according to claim 8, wherein the controller (21) acquires the background data transfer policy based at least on energy related information within a network provided by a network data analytics function (3).

10. The information processing apparatus according to claim 9, wherein:
the controller (21) registers the energy requirement to the network data analytics function (3), and
the controller (21) receives, from the network data analytics function (3), the energy related information transmitted in accordance with whether the energy requirement is satisfied.

11. The information processing apparatus according to any of claims 8 to 10, wherein the energy requirement includes a requirement regarding one of energy consumption, energy efficiency and a renewable energy ratio.

12. The information processing apparatus according to any of claims 8 to 11, wherein the controller (21) acquires a plurality of background data transfer policies stored in advance from a unified data repository (4).

13. The information processing apparatus according to claim 12, wherein the controller (21) selects one or more background data transfer policies that match the energy requirement from the acquired plurality of background data transfer policies.

14. The information processing apparatus according to any of claims 8 to 13, wherein the controller (21) acquires a background data transfer policy that further satisfies a second energy requirement designated by a network operator.

15. A computer-readable storage medium comprising instructions which, when executed by a computer, cause the computer to carry out the method according to any of claims 1 to 7.
